(19) **Europäisches Patentamt**
**European Patent Office**
**Office européen des brevets**

(11)  **EP 1 861 596 B1**

(12)  **FASCICULE DE BREVET EUROPEEN**

(45) Date de publication et mention
de la délivrance du brevet:
**25.05.2016  Bulletin 2016/21**

(51) Int Cl.:
***F02B 23/06*** *(2006.01)*

(21) Numéro de dépôt: **06743591.7**

(22) Date de dépôt: **15.03.2006**

(86) Numéro de dépôt international:
**PCT/FR2006/000593**

(87) Numéro de publication internationale:
**WO 2006/097639 (21.09.2006 Gazette 2006/38)**

(54) **MOTEUR A COMBUSTION INTERNE, NOTAMMENT A INJECTION DIRECTE, AVEC UN PISTON MUNI D'UN BOL COMPRENANT UN TETON**

BRENNKRAFTMASCHINE MIT DIREKTEINSPRITZUNG UND EINE OMEGA-FORMIGE KOLBENMULDE

INTERNAL COMBUSTION ENGINE, IN PARTICULAR WITH DIRECT INJECTION, WITH A PISTON PROVIDED WITH A TROUGH COMPRISING A DOG POINT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.03.2005  FR 0502648**

(43) Date de publication de la demande:
**05.12.2007  Bulletin 2007/49**

(73) Titulaire: **Institut Français du Pétrole**
**92852 Rueil Malmaison Cedex (FR)**

(72) Inventeurs:
• **KNOP, Vincent**
**F-92500 Rueil Malmaison (FR)**
• **RANINI, Alain**
**92500 Rueil Malmaison (FR)**
• **WALTER, Bruno**
**F-92700 Colombes (FR)**

(56) Documents cités:
**EP-A- 1 357 274       WO-A-2005/001255**
**DE-A1- 10 028 449     FR-A- 2 818 324**
**FR-A- 2 818 325**

**Description**

La présente invention se rapporte à un moteur à combustion interne, notamment à injection directe, avec un piston muni d'un bol comprenant un téton.

Elle concerne plus particulièrement un moteur à injection directe de type Diesel pouvant fonctionner selon deux modes de combustion. Un mode homogène, pour les faibles et moyennes charges du moteur, avec une injection de carburant permettant d'obtenir un mélange homogène de carburant avec de l'air ou avec un mélange d'air et de gaz d'échappement recirculés avant le démarrage de la combustion. L'autre mode de combustion, dit combustion conventionnelle, consiste en une injection du carburant autour du point mort haut du piston et en une combustion par diffusion, ce mode étant préférentiellement utilisé aux charges élevées

Un tel type de moteur, comme mieux décrit dans les demandes de brevet français N° 2 818 324 et 2 818 325 du demandeur comprend au moins un cylindre, un piston coulissant dans ce cylindre, une chambre de combustion délimitée sur un côté par la face supérieure du piston comprenant un téton disposé au centre d'un bol concave et au moins un injecteur pour injecter du carburant avec un angle de nappe inférieur ou égal à

$$2\,Arctg\,\frac{CD}{2F}$$

où CD est le diamètre du cylindre et F la distance entre le point d'origine des jets de carburants issus de l'injecteur et la position du piston correspondant à un angle de vilebrequin de 50° par rapport au point mort haut.

Ainsi, dans le cas d'injections précoces, c'est-à-dire quand la position du piston est au voisinage de 50° d'angle du vilebrequin pour la phase d'injection choisie par rapport au point mort haut du piston, le carburant ne vient pas au contact de la paroi du cylindre et se mélange avec l'air ou le mélange d'air et de gaz brûlés recirculés présent dans la chambre de combustion.

Dans ce type de moteur, le demandeur a utilisé un bol avec des valeurs particulières de l'angle au sommet du téton (de 0° à 30° supérieures à celles de l'angle de nappe) qui permettent d'obtenir un mélange homogène du mélange carburé lors de l'injection.

Le demandeur a poursuivi ses recherches sur cet angle au sommet et a abouti aux résultats selon lesquels cet angle au sommet pouvait être encore augmenté tout en améliorant les performances du moteur tant au niveau de sa puissance que de l'émission de polluants, comme les suies.

A cet effet, la présente invention concerne un moteur à combustion interne, notamment à injection directe comprenant au moins un cylindre, un piston coulissant dans ce cylindre, une chambre de combustion délimitée sur un côté par la face supérieure dudit piston comprenant un bol concave à l'intérieur duquel est disposé un téton d'angle au sommet $a_2$ et un injecteur de carburant pour injecter du carburant avec un angle de nappe de jets $a_1$ inférieur ou égal à $2\,Arctg\,\dfrac{CD}{2F}$ où CD est le diamètre du cylindre et F la distance entre le point d'origine des jets de carburants issus de l'injecteur et la position du piston correspondant à un angle de vilebrequin de 50° par rapport au point mort haut (PMH), caractérisé en ce que l'angle au sommet $a_2$ du téton est supérieur à l'angle de nappe de jets $a_1$ d'un angle supérieur à 30° et inférieur à 60°.

Les autres caractéristiques et avantages de l'invention apparaîtront à la lecture de la description donnée ci-après à partir d'un exemple non limitatif de réalisation, en se référant aux dessins annexés où :

- la figure 1 montre schématiquement un moteur à combustion interne selon l'invention ;
- la figure 2 est un graphique montrant l'évolution de la quantité de suies (S) en fonction de la différence entre l'angle au sommet du téton et l'angle de nappe de jets de carburant $(a_2-a_1)$ °, en degré et
- la figure 3 est également un graphique sur lequel apparaît l'évolution des niveaux de puissance générée par le moteur (P) en fonction de la différence entre l'angle au sommet du téton et l'angle de nappe dé jets de carburant $(a_2-a_1)$ °, en degré.

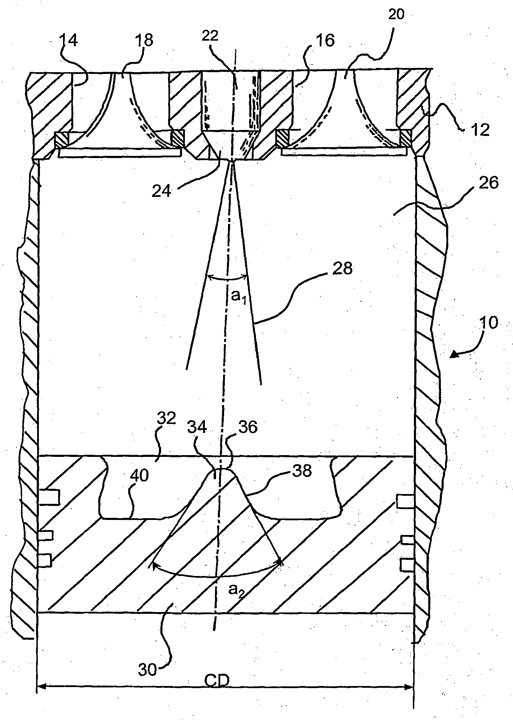

En se référant à la figure 1, un moteur à combustion interne à injection directe, notamment de type Diesel, comprend au moins un cylindre 10 de diamètre CD et une culasse 12 portant des moyens d'admission d'air et des moyens d'échappement des gaz brûlés, ici respectivement au moins une tubulure d'admission 14 pour un fluide gazeux, tel que de l'air ou un mélange d'air et de gaz brûlés recirculés (EGR), au moins une tubulure d'échappement 16 de gaz brûlés, les tubulures étant commandées en ouverture, ou en fermeture, par une soupape d'admission 18 et une soupape d'échappement 20. La culasse porte également un injecteur de carburant 22 qui est préférentiellement disposé coaxialemerit à l'axe du cylindre et comporte au voisinage de son nez 24 une multiplicité d'orifices à travers desquels le carburant est pulvérisé dans la chambre de combustion 26, selon des jets 28. La chambre de combustion est délimitée parla face supérieure d'un piston 30, coulissant de manière alternative rectiligne dans le cylindre 10, la face interne de la culasse 12 en regard de ce piston et la paroi circulaire du cylindre 10 comprise entre les deux faces. La face supérieure du piston comporte un bol concave 32 à l'intérieur duquel un téton 34 est disposé en étant situé sensiblement au centre de ce bol et en s'élevant vers la culasse 12.

Comme mieux décrit dans les brevets français N° 2 818 324 et 2 818 325 du demandeur, l'injecteur de carburant 22 est de type à faible angle de nappe $a_1$. Cet angle $a_1$ est choisi pour que la paroi du cylindre 10 ne soit jamais mouillée par le carburant pour toute position du piston 30 comprise entre + 50° et $+\alpha$ ou entre -50° et

-$\alpha$, où $\alpha$ représente l'angle du vilebrequin pour la phase d'injection choisie par rapport au point mort haut du piston, cet angle $\alpha$ étant supérieur à 50° et inférieur ou égal à 180° pour obtenir une combustion de type homogène.

Si CD désigne le diamètre (en mm) du cylindre 10 et F la distance (en mm) entre le point d'origine des jets de carburants 28 et la position du piston correspondant à un angle de vilebrequin de 50°, alors l'angle de nappe $a_1$ (en degré) sera inférieur ou égal à

$$2 Arctg \frac{CD}{2F}.$$

Par angle de nappe, il est entendu l'angle au sommet que forme le cône issu de l'injecteur et dont la paroi périphérique fictive passe par tous les axes des jets de carburant 28.

Avantageusement, la fourchette angulaire pour l'angle de nappe $a_1$ est au plus de 120° et préférentiellement entre 40° et 100°.

Comme précédemment mentionné, le piston 30 comprend un bol 32 dont la concavité est tournée vers la culasse et qui comprend le téton 34.

Le téton, qui se situe au centre du bol 32 et qui peut être coaxial à l'axe de la nappe $a_1$ des jets de carburant, présente une forme conique dont le sommet 36 est légèrement arrondi. Ce sommet se poursuit par un flanc incliné 38 sensiblement rectiligne en direction du fond 40 du bol. L'angle au sommet $a_2$ du téton est adapté à l'angle de nappe $a_1$ de manière à ce que le carburant soit injecté sensiblement le long du flanc 38 de ce téton. Préférentiellement, cet angle au sommet $a_2$ du téton est supérieur d'un angle de 30° à l'angle de nappe $a_1$ et inférieur d'un angle de 60° à cet angle de nappe.

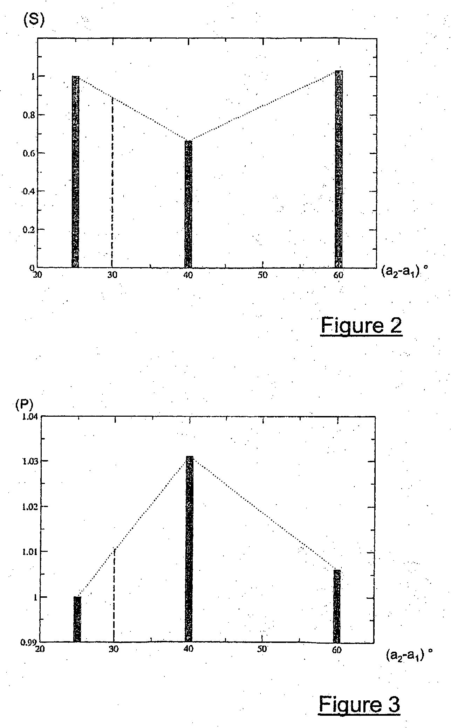

Les figures 2 et 3 illustrent, à titre uniquement d'exemples, les variations d'émissions de polluants, en l'occurrence des suies, et les variations de puissance du moteur (P) en fonction de la différence entre l'angle au sommet $a_2$ du téton et l'angle de nappe $a_1$ de jets de carburant. Sur ces figures, le demandeur a reporté les résultats de ses recherches sur un moteur avec un piston dont le téton a un angle de somment dont la différence avec l'angle de nappe de jets de carburant $a_1$ varie de 25° à 60°.

Il peut être remarqué que, dans le cas de la figure 2, la quantité de suies diminue de façon significative entre une différence d'angle $a_2$-$a_1$ comprise entre 25° et 30°, ce qui est du domaine décrit dans les demandes de brevet français N° 2 818 324 et N° 2 818 325 du demandeur. De façon surprenante, cette quantité de suies diminue de manière encore plus significative entre une différence d'angle $a_2$-$a_1$ supérieure à 30° et inférieure ou égal à 40° pour ensuite augmenter, entre une différence d'angle $a_2$-$a_1$ supérieure à 40° et inférieure ou égale à 60°, jusqu'au niveau de la différence d'angle égale à 25°. De ce fait, il peut être considéré que l'angle au sommet du téton est supérieur à l'angle de nappe de jets $a_1$ d'un angle supérieur à 30° et inférieur à 60° en limitant les émissions de polluants.

Ceci se retrouve également dans la figure 3 où la puissance (P) du moteur croit entre une différence d'angle $a_2$-$a_1$ de 25° à 30° puis continue de croître (de l'ordre de 2% par rapport à la puissance considérée à la différence d'angle de 30°) entre une différence d'angle comprise entre 30° et 40° pour ensuite baisser jusqu'à la différence d'angle de 60° tout en restant supérieure à la puissance considérée à la différence d'angle de 25°.

La présente invention n'est pas limitée aux exemples de réalisation décrit ci-dessus mais englobe toutes variantes et tous équivalents.

## Revendications

**1.** Moteur à combustion interne, notamment à injection directe comprenant au moins un cylindre (10), un piston (30) coulissant dans ce cylindre, une chambre de combustion (26) délimitée sur un côté par la face supérieure dudit piston comprenant un bol concave (32) à l'intérieur duquel est disposé un téton (34) d'angle au sommet ($a_2$) et un injecteur (22) de carburant pour injecter du carburant avec un angle de nappe de jets ($a_1$) inférieur ou égal à

$$2 Arctg \frac{CD}{2F}$$ où CD est le diamètre du cylindre (10) et F la distance entre le point d'origine des jets de carburants issus de l'injecteur et la position du piston (30) correspondant à un angle de vilebrequin de 50° par rapport au point mort haut (PMH), **caractérisé en ce que** l'angle au sommet ($a_2$) du téton (34) est supérieur à l'angle de nappe de jets ($a_1$) d'un angle supérieur à 30° et inférieur à 60°.

## Patentansprüche

**1.** Brennkraftmaschine, insbesondere mit Direkteinspritzung, umfassend wenigstens einen Zylinder (10), einen im Zylinder gleitenden Kolben (30), eine Brennkammer (26) begrenzt an einer Seite durch eine obere Fläche des Kolbens umfassend eine konkave Kolbenmulde (32), innerhalb der eine Brust (34) mit einem Scheitelwinkel ($a_2$) angeordnet ist, und ein Krafstoffinjektor (22), um Kraftstoff mit einem Strahlöffnungswinkel ($a_1$) kleiner gleich $2 Arctg \frac{CD}{2F}$ einzuspritzen, wobei CD der Durchmesser des Zylinders (10) ist und F die Entfernung zwischen dem Austrittspunkt des aus dem Injektor austretenden Kraftstoffstrahls und der Position des Kolbens (30) ist, die zu einem Kurbelwellenwinkel von 50°, bezogen auf den oberen Totpunkt (OT), korrespondiert, **dadurch gekennzeichnet, dass** der Scheitelwinkel ($a_2$) der Brust (34) größer als der Strahlöffnungswin-

kel (a$_1$) ist bei einem Winkel von größer 30° und kleiner 60°.

**Claims**

1. An internal-combustion engine, notably of direct injection type, comprising at least a cylinder (10), a piston (30) sliding in this cylinder, a combustion chamber (26) delimited on one side by the upper face of said piston comprising a concave bowl (32) within which a teat (34) of vertex angle (a$_2$) is arranged and a fuel injection nozzle (22) for injecting fuel with a jet sheet angle (a$_1$) less than or equal to

   $$2\,Arctg\,\frac{CD}{2F}\,,$$ where CD is the diameter of cylinder (10) and F the distance between the point of origin of the fuel jets from the injection nozzle and the position of piston (30) corresponding to a crank angle of 50° to the top dead centre (TDC), **characterized in that** vertex angle (a$_2$) of teat (34) is greater than jet sheet angle (a$_1$) by an angle greater than 30° and less than 60°.

Figure 2

Figure 3

**EP 1 861 596 B1**

## RÉFÉRENCES CITÉES DANS LA DESCRIPTION

**Documents brevets cités dans la description**

- FR 2818324

- FR 2818325